# EUROPEAN PATENT SPECIFICATION

(11) **EP 2 804 807 B1**
(45) Date of publication and mention of the grant of the patent: **02.08.2017**
(21) Application number: 13738853.4
(22) Date of filing: 17.01.2013
(51) Int. Cl.: B63B 59/00, B63B 17/04, B63B 27/14, B63J 2/12

(54) **METHOD AND SYSTEM FOR DE-ICING OF MARINE STRUCTURES**
VERFAHREN UND SYSTEM ZUR ENTEISUNG VON SCHIFFSKONSTRUKTIONEN
PROCÉDÉ ET SYSTÈME POUR DÉGIVRAGE DE STRUCTURES MARINES

(30) Priority: 17.01.2012 NO 20120047
(43) Date of publication of application: 26.11.2014
(73) Proprietor: Ulmatec Pyro AS, 6280 Søvik (NO)
(72) Inventor: URKE, Jan Petter, N-6293 Longva (NO)
(74) Representative: Acapo AS
(86) International application number: PCT/NO2013/050012
(87) International publication number: WO 2013/109151

(56) References cited:
- EP-A2- 1 043 551
- EP-A2- 1 043 551
- DE-A1- 2 109 049
- JP-A- S6 047 784
- US-A- 3 881 235
- US-A- 4 254 821
- US-A- 5 022 459
- US-A- 5 178 485

## Description

### The Technical Field of the Invention

The present invention relaters to a method and a system for heating a surface of an object on board a vessel, such as for example stairways, handrails, comprising circulation of a heated thermal fluid from a heat source through a piping system to the object to be heated and back to the heat source for re-heating, and where the piping system incorporating one or more pumps; one or more manifolds, one or more valves, one or more means for measuring and/or controlling pressure, temperature and/or flow rate(s) of the thermal medium,; integrating the heating means with the object to be heated.

### Background for the Invention

In region where temperatures below freezing point readily occur during the late autumn, winter and/or early spring seasons there is a tendency to build up of ice on vessels operating in such regions. In particular, but not exclusively, when subjected to heavy sea and sea gust, such ice build up may occur fast, representing a safety hazard. This may have a detrimental effect on the stability of the vessel and/or on portions of the vessel of vital importance for the safety of the vessel and its crew. Such vital regions of safety are for example gangways, railings, ladders, davits or other life saving means.

It has previously been proposed to provide heating elements in such portion of the vessel, such heating elements being powered by electricity on a more or less continuous basis for de-icing operations. Production of electricity at sea, based on the auxiliaries is, however, expensive and earth fault is likely to occur frequently, causing detrimental problems to the reliable supply of electricity. It should also be appreciated that the capacity for production of electricity onboard a vessel is limited, and increased requirement for production of electricity would require increase of the capacity which already is exhausted.

EP 1 043 551 describes a method and a system for prevention of icing of stairways, guardrails, etc. in winter season and for air conditioning of cabins, etc. in summer season. The method comprises circulation of a heated thermal vapour from a heat source through a piping system to a heating means arranged in association with the object to be heated and back to the heat source for re-heating. The piping system incorporates pumps, valves and means for measuring and/or controlling temperatures and/or flow rates. DE 21 09 049 describes a heating or freezing system for a completely different area of use, namely heating or freezing the ground surfaces or floor surfaces on sport venues, such as football pitches, tennis courts, ice rinks and also of swimming pools, and on streets or pavements. The system according to D2 disclose a piping system in the form of supply pipe concentrically arranged inside a return line, the one end of each of the lines being connected to an inlet manifold and an outlet manifold respectively, the opposite ends of a pair of supply line and return line being interconnected so that the thermal fluid flowing though the centrally arranged supply line will return through the annulus formed by the return line. The purpose of the concentric configuration of the piping system is to save space.

It is therefore a need for providing an improved method and system for de-icing which more or less is independent of the use of electricity as an energy source for de-icing. It is also a need for a system where the surface temperature on said for de-icing. It is also a need for a system where the surface temperature on said parts does not become too high or may cause skin burn or unpleasantness when touching such heated areas.

### Summary of the Invention

The principle used according to the present invention incorporates a closed pressurized heating system for circulation of a heated fluid through a pipe system where the pipe system and/or the temperature, flow rate and/or state of the heating fluid is configured in such way that a constant temperature is obtain along per-determined length of the external surface of the object to be heated.

The following description of the present invention is based on the following definitions:
- "heating system" or "system" means the entire system including heat source, pumps, expansion tanks, heated object(s), heating element(s), control system, the associated piping system, manifolds, etc;
- "heated object" or "object or be heated" means the part(s) of the structure of the vessel or components thereof to be heated or de-iced;
- "heating element" means the inner profile circulation ducts through which the thermal fluid circulates when associated with the heated object and/or said heating element may form an integrated part of the heated object or may form an associated, separate part arranged inside or attached the object to be heated;
- "piping system" means pipes, ducts, valves, manifolds etc. for circulating the thermal fluid in a circuit to and fro the heat source and the heated object, and
- "thermal fluid" may be any suitable liquid, gas or steam, having heating properties and suited for flowing through the system..

An object of the present invention is to provide a system for optimal heating of a surface, keeping the energy consumption and flow of heating thermal fluid at lowest possible level when used for different purpose, such as for example anti-icing or de-icing.

Another object of the present is to provide a method and a system for obtaining as even and equal outer surface temperature on the object to be heated comprising hollow profiles or tubes.

Another object of the invention is to provide a control of the external surface temperature of a surface to be heated and that the temperature of the external surface may be controlled in such way that it is different in different parts or sections of the external surfaces to be heated.

The objects are achieved by a method and a system as further defined by the independent claims, while alternatives, variants and embodiments are defined by the dependent claims.

According to the present invention, the method comprises circulating a heated thermal fluid from a heat source through a piping system to an object to be heated by heating means arranged in association with the object to be heated and back to the heat source for re-heating. The piping system incorporates one or more pumps; one or more manifolds, one or more valves, one or more means for measuring and/or controlling pressure, temperature and/or flow rate(s). According to the present invention said heating means comprises one or more heating element configured to provide a more or less even or uniform surface temperature on the entire surface of the object to be heated, in order to keep the energy consumption and the thermal fluid flow as low as possible.

The at least one heating element is made as an integrated unit with the object to be heated. Moreover, the heated thermal fluid flows preferably in a supply duct in one direction inside the heated object and is returning at the end of the heated object in opposite direction in a return duct, the return duct being arranged in a piggyback configuration with the supply duct in the heated object, establishing a common intermediate interface heat transferring surface between said supply duct and return duct.

Moreover, the heated thermal fluid flowing in the supply line(s) successively heats the thermal fluid flowing in opposite direction in the return line, thereby providing a more or less uniform temperature in the return duct and consequently on the external surface of the object to be heated.

According to one embodiment, the heated thermal fluid enters the supply duct at a temperature of T₁, flowing in one direction wherein heat is transferred to the thermal fluid returning to the heater in the return duct, leaving the return duct at a temperature of T₂ and then returns to the heater where the thermal fluid is re-heated up again to a temperature of T₁. For objects to be heated, where the possibilities for contact with the human body is present, T₂ should not to any degree be above 60 °C, while for other parts shielded from such contact, T₁ may be in the order up to 120 °C.

According to yet another embodiment, the heating elements are associated with a plurality of different objects and the flow of thermal fluid is controlled by a PLC based control system, preferably interfaced with a main computer system, which controls automatically the thermal fluid flow to individual objects to be de-iced.

The present invention also relates to a system for providing a more or less even or uniform temperature on an external surface of an object to be heated, such as for example stairways, handrails or the like on board a vessel. The system comprises one or more heating means associated with an object to be heated; a pipe system; a heater intended to heat a thermal fluid to a temperature T₁; a supply line and a return line; one or more manifolds; one or more valves; one or more pumps for circulating the thermal fluid through the system; and means for measuring and controlling temperature, flow rate and/or, pressure associated therewith at various positions in the system. The heating element(s) is/are configured to obtaining equal or uniform surface temperature on the entire object surface to be heated in order to keep the energy consumption and the thermal fluid flow as low as possible.

According to one embodiment, the heating element(s) is/are provided with a supply and return line forming a unit having a common interface surface, so that hot thermal fluid flowing through the supply line transfer heat to the returning thermal fluid flowing through the return line. The supply and return line may preferably, but not necessary form an integrated unit.

Moreover, the object to be heated may have an interface surface with a surface on the return line, so that the even or uniform temperature of the thermal fluid flowing through the return line heats the object to be heated.

In order to monitor and/or control the surface temperature of the object, the heat elements are associated with several objects and the system comprises a PLC based control system, preferably interfaced with a main computer system, for automatic controlling the thermal fluid flow to individual objects to be de-iced.

According to the present invention, a thermal fluid which is heated in the heater, is pumped by means of a circulation pump to a pressure manifold and thereupon to a heating element with a temperature T₁ up to 120 °C and that heat is transferred to the thermal fluid returning to the heater in the return duct, so that the thermal fluid leaves the return duct at a temperature of T₂ less than 120 °C and preferably less than 60 °C for objects where skin contact may occur, and then returns to the heater where the thermal fluid is re-heated up again to an temperature of T₁.

Dependent on the ambient air temperature, by applying a temperature of around 60 °C at the inlet to the supply duct and a low temperature, for example in the order of 5-10 °C at the exit of the return duct of the heating element, the flow rate through the system may be reduced to a minimum

The thermal fluid will on its way through the inner hollow section transfer energy from inner hollow section to the returning thermal fluid flowing in the return pipe or duct on the outside of the inner hollow section. The thermal fluid on the outside of the inner hollow section will transfer energy to the outside surface of the heating element. The temperature of the thermal fluid will on its way be cooled down from T1 to T2. The heat transfer area of the inner hollow section and the outer hollow section is adapted in a way that the temperature T3 on the outer surface of the element is equal all over the element.

The elements can according to the invention be of circular section, rectangular section or other sections and shape.

Moreover, one way of controlling and/or regulating the flow for obtaining an optimal result and effect is to regulate the element length or construction design, outer surrounding temperature and heat transfer volume of the system.

It should be appreciated that the external surface area of the supply duct and the inner surface area of the return duct in the heating element may be configured in such way that a required uniform or even temperature on the object surface to be heated is provided.

Moreover, the heating elements are associated with several objects and the system comprises a PLC based control system, preferably interfaced with a main computer system, for automatic controlling the thermal fluid flow to individual objects to be de-iced or heated.

An advantage with the solution according to the present invention is that the surface or surfaces to be heated do not become unevenly hot or too hot or to cold along portions of the surface, since very hot thermal fluid enter the heating element will be cooled down by the counter flowing fluid having delivered at least part of its heat to the object to be heated and that it is the returning cooled fluid that is interfacing the surface(s) to be heated, thus obtaining a more or less even or uniform temperature in the fluid delivering heat to the object to be heated.

The amount of energy to be delivered may for example be controlled by regulating the flow rate and/or the temperature of the thermal fluid flowing into the supply duct of the heating element. The pressure is preferably regulated for each individual height level of the vessel. The main pressure delivered by the circulation pump(s) is sufficient to deliver thermal fluid at the highest delivery point on the vessel where heating is required. At lower levels the pressure may be reduced in the manifold(s) so that it is sufficient to circulate at said highest level.

In order to achieve a most efficient and economical solution the pipe system transporting thermal fluid to and from the various heating elements may be provided with insulation in order to avoid detrimental loss of heat.

It should also be appreciated that the thermal fluid may be steam, a gas or a liquid, such as water glycol or the like while the material used in the heating elements is of a type with proper heat conductivity.

The heating element(s) may be provided with ducts having different cross sections such as a circular, rectangular, square ore other suitable cross sections.

The system and method may preferably also be used in connection with structures or systems, such as life rafts/mob rafts, davit, pipes for venting or airing tanks on deck level, safety nets on standby vessels at offshore fields or the like. When used in connection with said safety net reinforced, flexible hoses may be used in stead of metal ducts.

### Short Description of the Drawings

In the following one embodiment of the invention will now be described in more detail, referring to the drawings, where:
Figure 1 shows schematically a side view of a portion of a marine vessel, also indicating schematically part of a de-icing system for de-icing parts such as railings, stepladders, gangways stairs and guide rails;
Figure 2 shows schematically, seen as a side view, the principle used for establishing an integrated heating element for example in a railing;
Figure 3 shows schematically a cross sectional view through one embodiment of the integrated heating element, seen along the line A-A in Figure 2; and
Figure 4 shows schematically a cross sectional view through a second embodiment of the integrated heating element, seen along the line A-A in Figure 2.

### Detailed Description of the Drawings

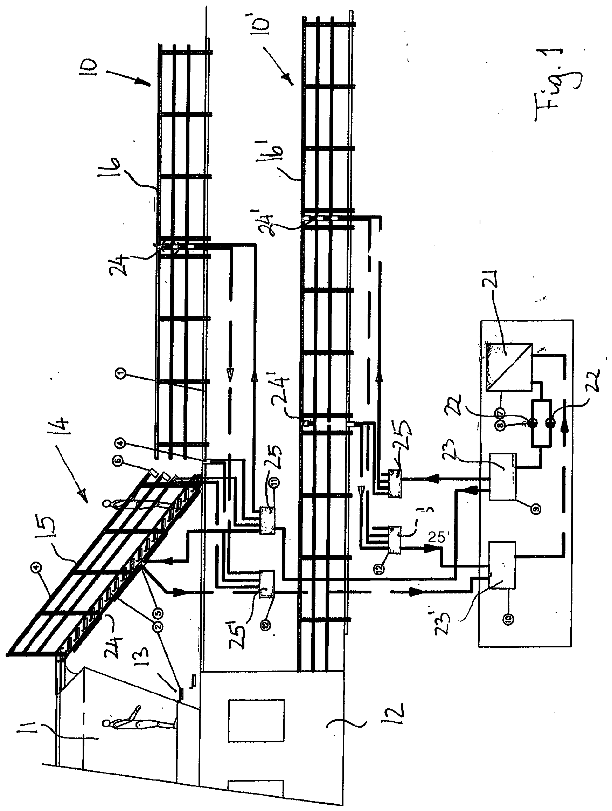

Figure 1 shows schematically a side view of a portion of a deck region (only partly shown) of a marine vessel (not shown). The Figure shows two deck levels 10, 10', i.e. a top deck 10 and a lower deck 10'. Further the vessel is provided with a bridge 11 at a level of the upper deck 10 and a quarter 12 or the like on level with the lower deck 10'. In order to be able to approach the upper deck 10 from the bridge 11 steps 13 are arranged. A staircase 14 extends from the top of the bridge 11 down to the top deck 10. A railing 15 is arranged on each side of the staircase 14. Further, a side railing 16 is arranged along the sides of the upper deck 10. Correspondingly, a side railing 16' is arranged on the lower deck 10'. From a clarity point of view, the remaining elements usually arranged on the decks 10,10' are not shown.

The railing 15 may for example comprise profiles, heated by incorporated, integrated heating elements 24 according to the present invention. The railing profiles are hollow profiles with integrated heating element 24 and may be formed of seawater resistant aluminum, coated with anodized or power coating. Each unit may for example be designed for an effect variable between 0 and 400 W/m².

The stairways 14 steps and the gangway may preferably also be heated in accordance with the present invention. As for the railings 15 the stairways steps are made of profiles with integrated heating elements 24, made of seawater resistant aluminum and coated with anodized or power coating. Each unit of stairways steps is provided with connections for thermal fluid, i.e. an inlet and an outlet and provided with flow regulation and control valves (not shown). Each unit may for example be designed for an effect variable between 0 and 400 W/m².

The connection units for each heating element may be used both for the inlet and the outlet and may be provided with controllable flow regulation valve.

Further, Figure 1 shows schematically the system according to the present invention is shown. In the following the heating or de-icing system will be described in further detail. It should be appreciated that the heating or de-icing system according to the present invention is a closed pressurized heating system for maritime installations based on thermal fluid (water/glycol) circulation. The working pressure is normally up to 3 bar. It should be appreciated, however, that the working pressure may be higher or lower than the specified pressure of 3 bar.

The thermal fluid may preferably by heated Marine Gas Oil (MGO), Heavy Fuel Oil (HFO), Liquefied Natural Gas (LNG), dual fuel burner MGO/LNG, electricity and/or by heat recovered from machinery such as exhaust gas system and/or High Temperature (HT)-cooling systems such as cooling of the cylinder walls in an engine and/or a turbo or Low Temperature (LT)-cooling system such as cooling of the gear or frequency converters. Alternatively, the system may normally be heated by a combination of one or more of said heat generating sources. Reference is made to the applicants co-pending Norwegian Patent Application No. 20110335, disclosing a system for regeneration of heat from various heat delivering sources on board of a vessel.

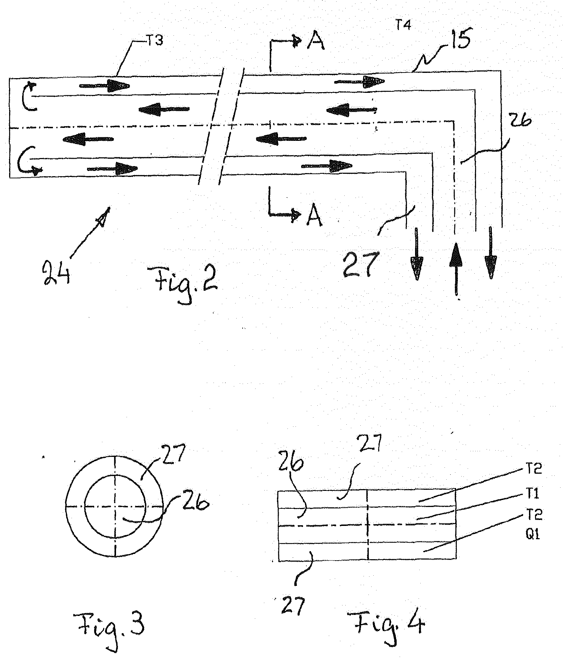

As shown in Figure 1 the thermal fluid is heated in a heater or heat exchanger 21, which may include instrumentation for automatic control (not shown). Heat is delivered to one side of the heat exchanger 21 from one or more of the sources described above. From the heat receiving side of the heat exchanger 21, the thermal fluid is pumped by means of one or more pumps 22, for example mounted on skid (not shown), where one of the pumps 22 are running while the other is on a stand-by. Further, the pumps 22 are associated with instrumentation for manual or automatic control, controlled from a remote control system on the bridge 11. From the exit from the pump 22, the thermal fluid is pumped to a manifold 23 on the pressure side where the thermal fluid is distributed to the inlet of the various heating elements 24. A typical heating element 24 will be described in connection with Figure 2.

From the distribution flow control unit or manifold 23 the thermal fluid is distributed through pipe lines either directly to or via secondary manifolds 25 on the pressure side to the heating element 24. Said distribution flow control units or manifolds 23, 25, are used for regulating and controlling the pressure and thermal fluid flow at different zones at each level/deck 10,10'. The manifolds 23,,25, may be provided with manual or automatic flow control ranging from 0 to 100% flow. Moreover, each manifold may be include instrumentation for automatic control (not shown) and may provided with at least one valve (not shown for a by-pass line, functioning as a pressure control. The manifold may also be provided with a valve for each branch line leaving the manifold 23,25 for individual flow control for each line.

When leaving the heating elements 24, the return lines from the various heating elements may return to the heat exchanger 21 through a secondary manifold 25' as described above, collecting the various branch lines and further through a main manifold 23', where the thermal fluid is re-heated.

The system is automatically controlled and monitored by a PLC based control system (not shown) and can be interfaced to the main computer system (IAS) (not shown). The system controls automatically the thermal fluid flow and temperature to the individual de-icing zone or heating elements 24,24'. A safety control system (not shown) and system for manual control (not shown) may also be included. The control system is preferably of a type approved by the major class society.

As pointed out above, the circulation system is operated by two or more main circulation pumps 22. For this purpose, running and stand-by functionality is built into the control system. Manual control and emergency control may also preferably be included in the system.

The control cabinet (not shown) may for example be provided with a 6.4" touch screen and showing mimic diagram according to the piping diagram. Further, said cabinet is the user interface for operating the system, enabling manual and/or automatic control of the various temperatures, flow and pressure.

Figure 2 shows schematically, seen as a side view, the principle used for establishing an integrated heating element for example in a railing 15. As seen the heating element 24 may also form the top hand railing or the intermediate railing as such, thus forming a completely integrated part of the railing 15. Each heating element 24 comprises a centrally arranged inflow duct with end connection at the inlet for connection to the piping system from the heat exchanger. One or more outflow ducts 27 surround the centrally arranged inflow duct 26. The inner end of the inflow duct 26 is in fluid communication with the inner end of the outflow duct 27. As shown in Figures 3 and 4 the heating element 24 may have different cross sectional shapes, such as for example a circular shape where the inflow duct 26 is concentrically and co-axially arranged inside the outflow duct 27, or for example a rectangular shape, where the inflow duct 26 is co-axially arranged between two outflow ducts 27. It should be appreciated that the cross sectional areas of the inflow duct 26 and the outflow duct(s) 27 are given by conventional thermal energy calculations, so that the transferred energy volumes will be uniform or equal along the entire length of a heating element 24. As indicated by the arrows heated thermal fluid is delivered and flows centrally inside the inflow duct 26 of the heating element 24 and changes direction with 180 degrees at the end of the inflow duct 26 and returning to the heat exchanger through the outflow duct(s) 27, surrounding the inflow duct 26. In order to regulate or control the effect per external area, the flow rate and/or the temperature of the thermal fluid flow are regulated.

The thermal fluid system according to the present invention may also be provided with an expansion tank for a temperature range of -30 to 120 °C.

The system contains major components for the functionality described above. Piping and accessories like manual valves, temperature gauges, pressure gauges etc, is not included.

Although the present invention is described in connection with de-icing of structures on a marine vessel, it should be appreciated that the method and the system in principle can also be used in general construction elements. An example of such other areas of use is for used in heating systems using circulating thermal fluids for distribution of energy.

It should be appreciated that the shape and cross sectional area, including the arrangement of the inflow duct 26 with respect to the outflow duct 27 are given by the functional requirements and required temperature on the external surface of the heating element 24, and/or given by esthetical requirements.

## Claims

1. Method for heating a surface of an object on board of a vessel, such as for example stairways (14), handrails (15), comprising circulation of a heated thermal fluid from a heat source (21) through a piping system to the object to be heated and back to the heat source for re-heating, and where the piping system incorporating one or more pumps (22); one or more manifolds (23,23'25,25'), one or more valves, one or more means for measuring and/or controlling pressure, temperature and/or flow rate(s) of the thermal medium; integrating the heating means (24) with the object to be heated, providing the heating means (24) with a supply line (26) where the thermal fluid is flowing in one direction, and a return line (27) where the thermal fluid is flowing in opposite direction; **characterized by** configuring the supply line (26) and the return line (27) of the heating element (24) in such way the lines (26,27) are given a common interface surface; establishing a fluid communication between one end of the supply line (26) and one end of the return line (27); and arranging the supply line (26) and the return line (27) in such way with respect to the object to be heated that the thermal fluid flowing through the return line (27) is heating the object to be heated, establishing a more or less uniform surface temperature on the object to be heated.

2. Method according to claim 2, arranging the return line (27) in a side-to-side configuration with the supply line (26) of the heating element (24).

3. Method according to claim 1, arranging the return line (27) co-axially around the supply line (26).

4. Method according to one of the claims 1 to 3, where the heated thermal fluid enters the supply duct (26) at a temperature of T₁ up to 120 °C and that heat is transferred to the thermal fluid returning to the heater (21) in the return duct (27), so that the thermal fluid leaves the return duct (27) at a temperature of T₂ less than 120 °C and preferably less than 60 °C for objects where skin contact may occur, and then returns to the heater (21) where the thermal fluid is re-heated up again to a temperature of T₁.

5. Method according to one of the claims 1 to 4, wherein the heat elements (24) are associated with several objects and wherein the flow of thermal fluid is controlled by a PLC based control system, preferably interfaced with a main computer system, which controls automatically the thermal fluid flow to individual objects to be de-iced.

6. System for heating an external surface of an object to be heated on board of vessel, such as for example stairways (14) and handrails (15), comprising one or more heating elements (24) forming an integrated unit with the object to be heated, a pipe system, a heater (21) intended to heat a thermal fluid to a temperature T₁; one or more manifolds (23,23',25,25'); one or more valves; one or more pumps (22) for circulating the thermal fluid through the system; and means for measuring and controlling temperature, flow rate and/or, pressure associated therewith at various positions in the system, the heating element (24) comprising a supply line (26) for thermal fluid flow in one direction and a return line (27) for thermal fluid flow in the opposite direction; **characterized in that** the supply line (26) and the return line (27) is configured in such way that the flow of thermal fluid through the lines has a common interface surface; and that one end of the supply line (26) and an end of the return line (27) are in fluid communication with each other, and that the return line (27) being arranged in such way with respect to the object to be heated that the thermal fluid flowing through the return line (27) heats the object to be heated, so that that a more or less uniform surface temperature on the surface of the object to be heated is established.

7. System according to claim 6, wherein the supply line (26) and the return line (27) have a common wall, so that the thermal fluid flowing through the supply line (26) transfers heat to the thermal fluid flowing through the return line (27).

8. System according to claim 6, wherein the supply line (26) is concentrically arranged inside the return line (27).

9. System according tone of the claims 6 to 8, wherein the supply (26) and return line (27) form an integrated unit.

10. System according to one of the claims 7 to 9, wherein the thermal fluid flowing through the system is subjected to a normal working pressure up to 3 bar or higher.

11. System according to one of the claims 8 to 10, wherein the heat elements (24) are associated with several objects and the system comprises a PLC based control system, preferably interfaced with a main computer system, for automatic controlling the thermal fluid flow to individual objects to be de-iced or heated.

## Patentansprüche

1. Verfahren zum Erwärmen einer Oberfläche eines Objekts an Bord eines Schiffes, wie z. B. Treppen (14), Handläufe (15), das die Zirkulation eines erwärmten Thermalfluids aus einer Wärmequelle (21) durch ein Rohrsystem zu dem zu erwärmenden Objekt und zurück zur Wärmequelle zur erneuten Erwärmung aufweist, und wobei das Rohrsystem eine oder mehrere Pumpen (22), einen oder mehrere Verteiler (23, 23'; 25, 25'), ein oder mehrere Ventile, ein oder mehrere Mittel zum Messen und/oder Steuern des Drucks, der Temperatur und/oder des/die Durchflusses/Durchflüsse des Thermalmediums aufweist, die Integration des Heizmittels (24) mit dem zu erwärmenden Objekt, die Bereitstellung einer Vorlaufleitung (26) für das Heizmittel, durch die das Thermalfluid in einer Richtung strömt, und einer Rücklaufleitung (27), durch die das Thermalfluid in der Gegenrichtung strömt, aufweist; **gekennzeichnet durch** Konfigurieren der Vorlaufleitung (26) und der Rücklaufleitung (27) des Heizelements (24) in der Weise, dass die Leitungen (26, 27) eine gemeinsame Grenzfläche erhalten; das Herstellen einer fluidischen Kommunikation zwischen einem Ende der Vorlaufleitung (26) und einem Ende der Rücklaufleitung (27); und die Anordnung der Vorlaufleitung (26) und der Rücklaufleitung (27) bezüglich des zu erwärmenden Objekts derart, dass das durch die Rücklaufleitung (27) strömende Thermalfluid das zu erwärmende Objekt erwärmt, wobei es eine im Wesentlichen gleichmäßige Oberflächentemperatur erzeugt.

2. Verfahren nach Anspruch 1, bei dem die Rücklaufleitung (27) und die Vorlaufleitung (26) des Heizelements (24) nebeneinander angeordnet werden.

3. Verfahren nach Anspruch 1, bei dem die Rücklaufleitung (27) koaxial um die Vorlaufleitung (26) angeordnet wird.

4. Verfahren nach einem der Ansprüche 1 bis 3, bei dem das erwärmte Thermalfluid mit einer Temperatur T₁ von bis zu 120°C in die Vorlaufleitung (26) eintritt und diese Wärme an das in der Rücklaufleitung (27) zum Heizgerät (21) zurückgeführte Thermalfluid übertragen wird, so dass das Thermalfluid die Rücklaufleitung (27) mit einer Temperatur T₂ unter 120°C und vorzugsweise unter 60°C verlässt, worauf das Thermalfluid erneut auf die Temperatur T₁ erwärmt wird.

5. Verfahren nach einem der Ansprüche 1 bis 4, wobei die Heizelemente (24) mehreren Objekten zugeordnet sind, und wobei die Strömung des Thermalfluids von einem PLC-basierten Steuerungssystem gesteuert wird, das die Strömung des Thermalfluids automatisch zu individuellen zu enteisenden Objekten steuert.

6. System zum Erwärmen einer Außenoberfläche eines Objekts an Bord eines Schiffes, wie z. B. Treppen (14) und Handläufe (15), das ein oder mehrere Heizelemente (24) aufweist, die eine integrierte Einheit mit dem zu erwärmenden Objekt bilden, ein Rohrleitungssystem, ein Heizgerät (21), das zum Erwärmen eines Thermalfluids auf eine Temperatur T₁ vorgesehen ist; einen oder mehrere Verteiler (23, 23'; 25, 25'); ein oder mehrere Ventile; eine oder mehrere Pumpen (22) zum Umwälzen des Thermalfluids durch das System; und Mittel zum Messen und Steuern der jeweils zugehörigen Temperatur, des jeweils zugehörigen Durchflusses und/oder des jeweils zugehörigen Drucks an verschiedenen Positionen im System, eine Vorlaufleitung (26) für die Strömung des Thermalfluids in einer Richtung, und eine Rücklaufleitung (27) für die Strömung des Thermalfluids in der Gegenrichtung;
**dadurch gekennzeichnet, dass** die Vorlaufleitung (26) und die Rücklaufleitung (27) so konfiguriert sind, dass die Strömung durch die Leitungen eine gemeinsame Grenzfläche hat; und dass ein Ende der Vorlaufleitung (26) und ein Ende der Rücklaufleitung (27) bezüglich des zu erwärmenden Objekts so angeordnet sind, dass das durch die Rücklaufleitung (27) strömende Thermalfluid das zu erwärmende Objekt erwärmt, so dass eine im Wesentlichen gleichmäßige Oberflächentemperatur erzeugt wird.

7. System nach Anspruch 6, wobei die Vorlaufleitung (26) und die Rücklaufleitung (27) eine gemeinsame Wandung haben, so dass das durch die Vorlaufleitung (26) strömende Thermalfluid die Wärme an das durch die Rücklaufleitung (27) strömenden Thermalfluid überträgt.

8. System nach Anspruch 6, wobei die Vorlaufleitung (26) konzentrisch in der Rücklaufleitung (27) angeordnet ist.

9. System nach einem der Ansprüche 6 bis 8, wobei die Vorlaufleitung (26) und die Rücklaufleitung (27) eine integrale Einheit bilden.

10. System nach einem der Ansprüche 7 bis 9, wobei das durch das System strömende Thermalfluid mit einem normalen Arbeitsdruck bis zu 3 bar oder darüber beaufschlagt wird.

11. System nach einem der Ansprüche 8 bis 10, wobei die Heizelemente (24) mehreren Objekten zugeordnet sind, und wobei das System ein PLC-basiertes Steuerungssystem aufweist, das vorzugsweise mit einem Hauptcomputersystem verbunden ist, um die Strömung des Thermalfluids zu individuellen zu enteisenden oder zu erwärmenden Objekten zu steuern.

## Revendications

1. Procédé pour chauffer une surface d'un objet à bord d'un navire, comme par exemple des escaliers (14), des rambardes (15), comprenant la circulation d'un fluide thermique chauffé depuis une source de chaleur (21) dans un système de tuyauterie jusqu'à l'objet à chauffer et de retour à la source de chaleur pour réchauffage, et où le système de tuyauterie incorpore une ou plusieurs pompes (22) ; un ou plusieurs collecteurs (23, 23', 25, 25'), une ou plusieurs vannes, un ou plusieurs moyens pour mesurer et/ou réguler la pression, la température et/ou le (s) débit(s) du milieu thermique ; l'intégration des moyens de chauffage (24) avec l'objet à chauffer, dotant les moyens de chauffage (24) d'un conduit d'alimentation (26) où le fluide thermique s'écoule dans une direction, et d'un conduit de retour (27) où le fluide thermique s'écoule dans une direction opposée ; **caractérisé par** la configuration du conduit d'alimentation (26) et du conduit de retour (27) de l'élément de chauffage (24) d'une manière telle que les conduits (26, 27) ont une surface d'interface commune ; l'établissement d'une communication fluidique entre une extrémité du conduit d'alimentation (26) et une extrémité du conduit de retour (27) ; et l'agencement du conduit d'alimentation (26) et du conduit de retour (27) d'une manière telle que, par rapport à l'objet à chauffer, le fluide thermique s'écoulant dans le conduit de retour (27) chauffe l'objet à chauffer, établissant une température de surface plus ou moins uniforme sur l'objet à chauffer.

2. Procédé selon la revendication 2, agençant le conduit de retour (27) selon une configuration côte à côte avec le conduit d'alimentation (26) de l'élément de chauffage (24).

3. Procédé selon la revendication 1, agençant le conduit de retour (27) de manière coaxiale autour du conduit d'alimentation (26).

4. Procédé selon l'une des revendications 1 à 3, où le fluide thermique chauffé entre dans le conduit d'alimentation (26) à une température de T₁ montant jusqu'à 120 °C et cette chaleur est transférée au fluide thermique revenant à l'élément chauffant (21) dans le conduit de retour (27), de telle sorte que le fluide thermique sort du conduit de retour (27) à une température de T₂ inférieure à 120 °C et de préférence inférieure à 60 °C pour des objets où un contact avec la peau peut survenir, puis retourne à l'élément chauffant (21) où le fluide thermique est réchauffé à nouveau jusqu'à une température de T₁.

5. Procédé selon l'une des revendications 1 à 4, dans lequel les éléments de chauffage (24) sont associés à plusieurs objets et dans lequel l'écoulement de fluide thermique est régulé par un système de régulation basé sur un API, de préférence interfacé avec un système informatique principal, qui régule automatiquement l'écoulement de fluide thermique vers des objets individuels à dégivrer.

6. Système pour chauffer une surface externe d'un objet à chauffer à bord d'un navire, comme par exemple des escaliers (14) et des rambardes (15), comprenant un ou plusieurs éléments de chauffage (24) formant une unité intégrée avec l'objet à chauffer, un système de tuyaux, un élément chauffant (21) destiné à chauffer un fluide thermique à une température T₁ ; un ou plusieurs collecteurs (23, 23', 25, 25') ; une ou plusieurs vannes ; une ou plusieurs pompes (22) pour faire circuler le fluide thermique dans le système ; et des moyens pour mesurer et réguler la température, le débit et/ou la pression associés à ceux-ci dans diverses positions dans le système, l'élément de chauffage (24) comprenant un conduit d'alimentation (26) pour un écoulement de fluide thermique dans une direction et un conduit de retour pour un écoulement de fluide thermique dans la direction opposée ; **caractérisé en ce que** le conduit d'alimentation (26) et le conduit de retour (27) sont configurés d'une manière telle que l'écoulement de fluide thermique dans les conduits ont une surface d'interface commune ; et **en ce qu'**une extrémité du conduit d'alimentation (26) et une extrémité du conduit de retour (27) sont en communication fluidique l'une avec l'autre, et **en ce que** le conduit de retour (27) est agencé d'une manière telle que, par rapport à l'objet à chauffer, le fluide thermique s'écoulant dans le conduit de retour (27) chauffe l'objet à chauffer, de telle sorte qu'une température de surface plus ou moins uniforme sur la surface de l'objet à chauffer est établie.

7. Système selon la revendication 6, dans lequel le conduit d'alimentation (26) et le conduit de retour (27) ont une paroi commune, de telle sorte que le fluide thermique s'écoulant dans le conduit d'alimentation (26) transfère la chaleur au fluide thermique s'écoulant dans le conduit de retour (27).

8. Système selon la revendication 6, dans lequel le conduit d'alimentation (26) est agencé de manière concentrique à l'intérieur du conduit de retour (27).

9. Système selon l'une des revendications 6 à 8, dans lequel les conduits d'alimentation (26) et de retour (27) forment une unité intégrée.

10. Système selon l'une des revendications 7 à 9, dans lequel le fluide thermique s'écoulant dans le système est soumis à une pression de travail normale montant jusqu'à 3 bars ou plus.

11. Système selon l'une des revendications 8 à 10, dans lequel les éléments de chauffage (24) sont associés à plusieurs objets et le système comprend un système de commande basé sur un API, de préférence interfacé avec un système informatique principal, pour réguler automatiquement l'écoulement de fluide thermique vers des objets individuels à dégivrer ou à chauffer.
